# EUROPEAN PATENT APPLICATION

(11) **EP 1 918 817 A1**
(43) Date of publication of application: **07.05.2008**
(21) Application number: 07101449.2
(22) Date of filing: 30.01.2007
(51) Int. Cl.: G06F 11/07

(54) **Software failure analysis**

(30) Priority: 31.10.2006 IN CH20002006
(71) Applicant: Hewlett-Packard Development Company, L.P., Houston, TX 77070 (US)
(72) Inventor: Ramarajar, Niranjan, Bangalore India 560001 (IN); Dhas, Prashant, Bangalore India 560052 (IN)
(74) Representative: Spaargaren, Jerome

(57) **Abstract**

A software failure analysis method for use following detection of a software failure on a computing system. The method includes collecting local data from the computing system pertaining to the failure, sending a request for comparison data to at least one other computing system, the request characterizing the comparison data according to one or more characteristics of the failure, the other computing system automatically responding to the request for comparison data by collecting or generating the comparison data by reference to the request, automatically responding to a provision of the local data and the comparison data by forming a comparison between the local data and the comparison data; and outputting the comparison.

## Description

### Field of the Invention

The present invention relates to software failure analysis methods, systems, environments and the like.

### Background of the Invention

HP OpenView Self Healing Services software (see http://support.OpenView.hp.comlself_healing.jsp) (SHS) and other software products attempt to diagnose and solve problems in various software applications. SHS, for example, does this in four distinct phases: fault detection, data collection, problem analysis, and proposing of possible solutions. Thus, SHS automatically detects problems in HP OpenView applications, automatically collects troubleshooting data on the state of the application and of the system on which fault occurred at the time of the fault, analyses that data, and creates system-specific incident reports with detailed analysis, existing documented solutions and a comprehensive patch analysis.

Installation is also a key part of product configuration and, with the wide range of operating systems presently available, the probability of installation failure has increased. Installation problems may take a considerable time to become apparent, but typically arise from system environment and configuration problems.

Typically, the investigator - once in possession of the SHS report - must compare the system and product data with comparable data collected from another system that is successfully running the same product. This comparison is commonly essential with installation problems in particular. In addition, when a fault occurs in a distributed application the data that is collected (from a local machine) may be insufficient for analysis; data from multiple machines is needed for a complete or sufficient analysis of the fault. Data collection from remote machines is currently performed essentially manually, which delays that collection.

### Summary of the Invention

According to a first aspect, there is provided a software failure analysis method for use following detection of a software failure on a computing system.

In one embodiment, the method includes collecting local data from the computing system pertaining to the failure, sending a request for comparison data to at least one other computing system, the request characterizing the comparison data according to one or more characteristics of the failure, the other computing system automatically responding to the request for comparison data by collecting or generating the comparison data by reference to the request, automatically responding to a provision of the local data and the comparison data by forming a comparison between the local data and the comparison data; and outputting the comparison.

According to other aspects, there is also provided a computing system adapted to analyse a software failure on the computing system, and a computing environment adapted to analyse a software failure in a computing system within the computing environment.

In a particular embodiment, the computing environment includes at least one other computing system, a first software tool provided on the computing system and adapted to respond to detection of the failure by collecting local data from the computing system pertaining to the failure, a second software tool adapted to send a request for comparison data to the other computing system, the request characterizing the comparison data according to one or more characteristics of the failure, a third software tool provided on the other computing system and adapted to respond to the request for comparison data by automatically collecting or generating the comparison data by reference to the request, and a fourth software tool adapted to receive the local data and the comparison data, and to form a comparison between the local data and the comparison data. The computing environment also includes an output for outputting the comparison.

The following embodiments include and refer to the HP OpenView (OV) suite of software products and to HP OpenView Self Healing Services software (SHS), both of Hewlett-Packard Company, but it should be understood that other software products can be used instead without departing from the present invention.

### Brief Description of the Drawings

In order that the invention may be more clearly ascertained, embodiments will now be described, by way of example, with reference to the accompanying drawing, in which:
FIG. 1 is a schematic view of a computing system according to an embodiment of the present invention.
FIG. 2 is a schematic view of a computing environment according to an embodiment of the present invention, including the computing system of FIG. 1.
FIG. 3 is a flow diagram of the method according to an embodiment of the present invention employed by the computing environment of FIG. 2.
FIG. 4 is a schematic view of a computing environment according to another embodiment of the present invention.
FIGS. 5A and 5B are a flow diagram of the method according to an embodiment of the present invention employed by the computing environment of FIG. 4.

### Detailed Description of the Embodiments

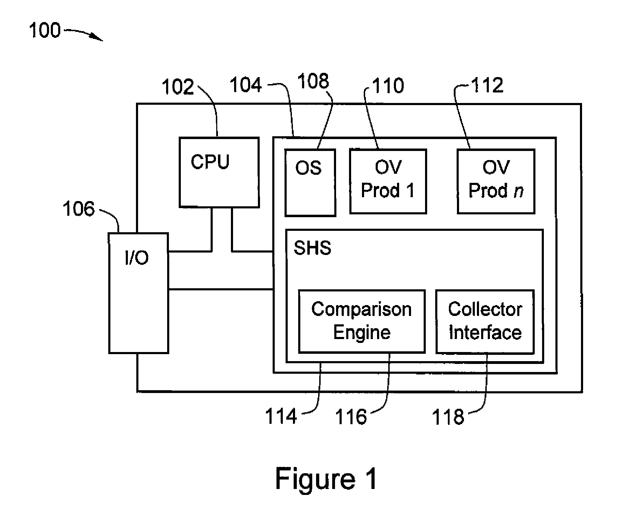

A computing system according to an embodiment of the present invention is shown schematically at 100 in FIG. 1. System 100 includes a processor 102, memory 104 and an I/O device 106. Memory 104 (which comprises RAM, ROM and at least one hard-disk drive) includes an operating system 108, multiple HP Open-View suite software products (OVs) 110,112, and HP Self-Healing Services software (SHS) 114, all executable by processor 102 to control system 100 to perform the various functions described below. It will be appreciated that, although only two OVs are shown in this figure, these are illustrative of any number of OVs.

SHS 114 differs from versions of SHS currently available in including both a comparison engine 116 and a collector interface 118. As is described in greater detail below, comparison engine 116 is configured to compare data collected after the failure of a software product (such as after its failure to install on system 100) with comparable data collected from other computing systems. Collector interface 118 is a web interface that can request and subsequently receive the data from those other systems, or be used by a user to request and subsequently receive the data from those other systems.

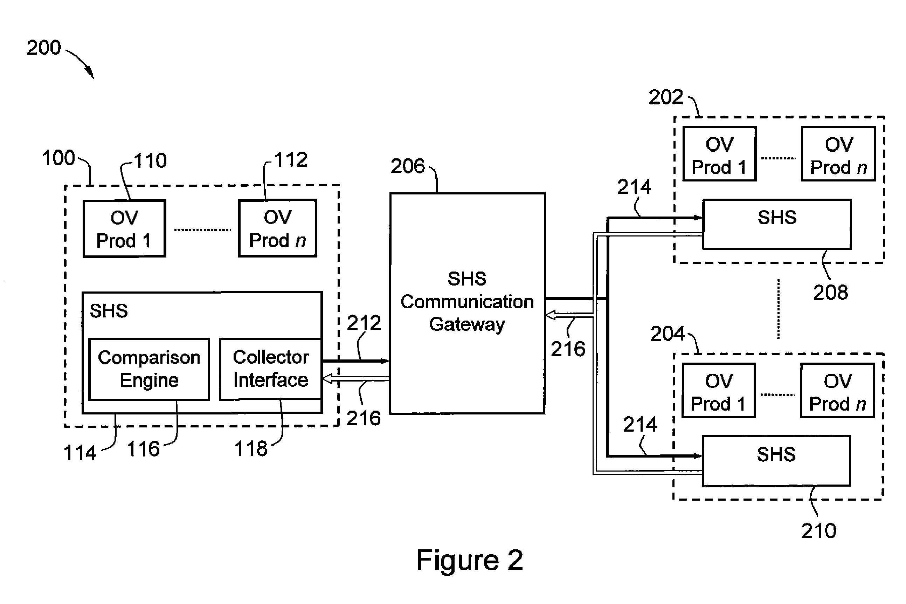

The functionality of these components may be particularly understood from the following description with reference to FIG. 2. FIG. 2 is a schematic view of a computing environment 200 including computing system 100 (of which only those components referred to in the following description are depicted), a plurality of other, comparable computing systems 202,204 (comparable, that is, to computing system 100), and a SHS Communication Gateway 206. It will again be appreciated that, although two other computing systems 202,204 are shown in this figure, these are illustrative of any number (i.e. one or more) of such other computing systems 202,204. It should also be noted that each of the other computing systems 202,204 has its own respective SHS 208,210 comparable to SHS 114 of computing system 100.

Computing system 100 communicates with the other computing systems 202,204 via SHS Communication Gateway 206, either within an intranet or over the internet (not shown). A request 212 for data sent from SHS 114 travels via the internet to the SHS Communication Gateway 206, which sends copies 214 the request 212 to the other computing systems 202,204. (The request 212 and all subsequent communication is sent securely by HTTPS.) Data 216 collected from the other computing systems 202,204 is returned, first to the SHS Communication Gateway 206 then to collector interface 118 of SHS 114.

Thus, when a user encounters a failure on computing system 100 (such as while attempting, unsuccessfully, to install a software product) in software that is supported by SHS for failure detection, data collection, etc., SHS 114 is configured to respond by initiating the collection of context specific data concerning the failure. SHS 114 collects data about the computing system 100 and its environment (such as CPU, RAM and hard-disk details, and environmental variables), and then compiles an incident report comprising that data.

Collector interface 118 uses a method termed "Remote Invocation of Self-Healing Services Data Collection" to collect data from the other computing systems 202,204 comparable to the data collected from computing system 100 (constituting the incident report). The choice and details of the other computing systems 202,204 can either be input by the user (by means of a web interface of collector interface 118), or determined by computing system 100 (such as by SHS 114) according to pre-existing information indicative of which other systems are both accessible and suitable for providing data for comparison purposes.

The Remote Invocation of Self-Healing Services Data Collection is performed as follows. As explained above, when the failure occurs on computing system 100, SHS 114 Services triggers a context specific data collection and creates an incident report for this fault. SHS 114 then sends a request 212 to the SHS Communication Gateway 206 to collect data from the relevant targeted computing systems (in this embodiment, the other computing systems 202,204) on which such data is to be collected. SHS Communication Gateway 206 forwards this request 214 to the other computing systems 202,204. This request 214 identifies the context for which data is to be collected or the specific files to be collected. The SHS 208,210 on the other computing systems 202,204 run their respective data collectors based on the request 214 for data collection received from SHS Communication Gateway 206. After collection, the SHS 208,210 on the other computing systems 202,204 transfer the collected data 216 to SHS Communication Gateway 206, which in turn forwards the collected data 216 to the requestor machine, computing system 100. As mentioned above, collected data 216 - like all other communication - is sent securely by HTTPS.

After collector interface 118 of requesting SHS 114 receives the data 216 collected from the other computing systems 202,204, SHS 114 passes the collected data to comparison engine 116. Comparison engine 116 receives the collected data, and adds it to the incident report. Comparison engine 116 then compares the original data in the incident report (i.e. collected from computing system 100) with the data collected from the other computing systems 202,204, by reference to product specific information concerning the particular software product that has failed, and displays the results of the comparison to the user (typically on the display of a user's personal computer that is networked to computing system 100). The user can then use the displayed information to diagnose the problem that led to the failure.

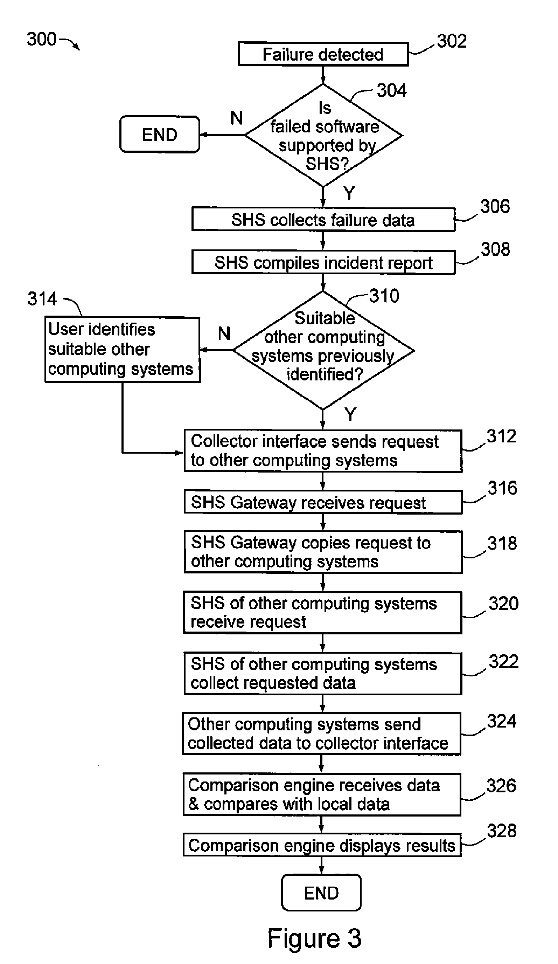

FIG. 3 is a flow diagram of a method of diagnosing a software failure according to this embodiment of the present invention. At step 302, following a software failure (such as an installation failure), the occurrence of the failure is detected by SHS 114. At step 304, SHS 114 checks whether the failed software (such as an installer) is supported by SHS. If so, processing continues at step 306, where SHS 114 collects context specific data concerning the failure then continues at step 308. If the failed software is not supported by SHS, processing ends.

At step 308, SHS 114 compiles an incident report comprising the data collected from computing system 100. At step 310, SHS 114 determines whether suitable and acceptable other computing systems 202,204 have been previously identified. If so, processing continues at step 312 where collector interface 118 initiates Remote Invocation of Self-Healing Services Data Collection to collect data from the other computing systems 202,204 from which suitable comparison data may be collected, by sending a request 212 to the other computing systems 202,204. (The request 212 and all subsequent communication is sent securely by HTTPS.) Processing then continues at step 316. If no suitable and acceptable other computing systems 202,204 have been identified, processing continues at step 314 where the user identifies (and inputs details of) suitable and acceptable other computing systems 202,204 with the web interface of collector interface 118, then processing passes to step 312.

At step 316, SHS Communication Gateway 206 receives request 212 and, at step 318, SHS Communication Gateway 206 sends copies 214 of the request to each of the other computing systems 202,204. At step 320, the respective SHS 208,210 of each other computing system 202,204 receives the request, at step 322 the respective SHS 208,210 of each other computing systems 202,204 collects the requested data, and at step 324 the other computing systems 202,204 send the requested data 216 to the collector interface 118 via SHS Communication Gateway 206.

At step 326, comparison engine 116 receives the collected data and compares it with the local data (i.e. the data collected from computing system 100). Finally, at step 328 comparison engine 116 displays the results of the comparison to the user and processing ends.

Certain variations are possible in other embodiments. For example, the process of remote data collection may be initiated from other than computing system 100, such as by a system administrator or support engineer at a remote (but networked) system. In such situations, SHS Communication Gateway 206 may receive the request that data be collected on the other computing systems 202,204 from the support engineer (SE); further, the request may be sent (at the support engineer's instigation) by, for example, a support desk tool running on the support engineer's system. SHS Communication Gateway 206 forwards the request - as in the embodiment illustrated in FIG. 2 - to the SHS 208,210 on each other computing system 202,204, but the other computing systems 202,204 then send the requested collected data to the support engineer rather than to the computing system 100 where the software failure occurred.

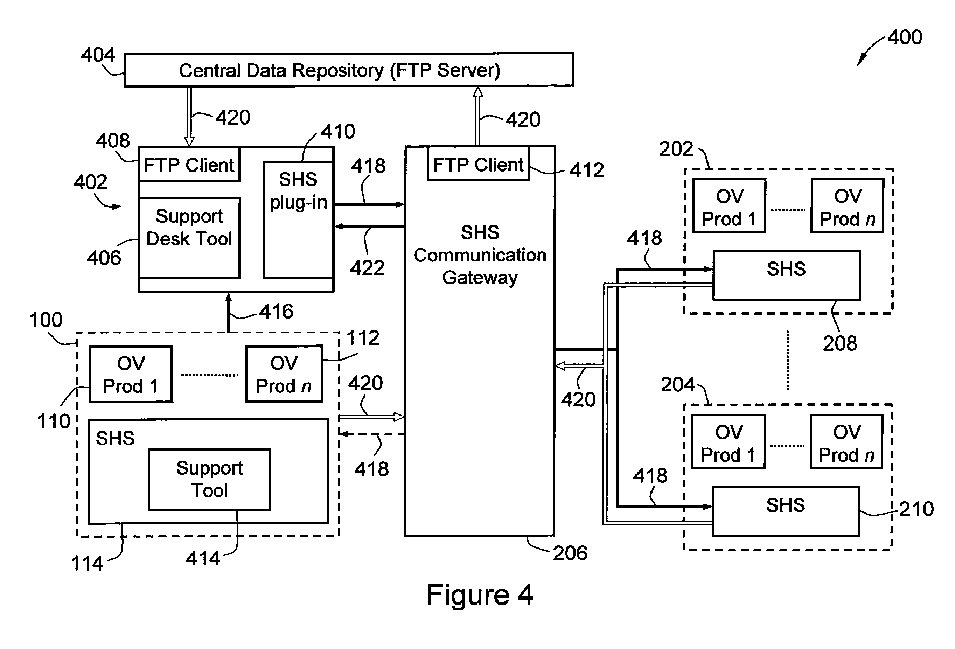

Such an embodiment is shown in FIG. 4, which is a schematic view of a computing environment 400 comparable in many respects to computing environment 200 of FIG. 2, so like reference numerals have been used to identify like features. In addition, computing environment 400 includes support engineer computer 402 (from which a support engineer can assist users of computing system 100), and an FTP Server 404 that acts as a Central Data Repository of collected data. Support engineer computer 402 includes (or can invoke) a software Support Desk Tool 406, an FTP client 408 (for communicating with FTP Server 404) and a SHS plug-in 410 (for communicating with SHS Communication Gateway 206). In this embodiment, SHS Communication Gateway 206 can also invoke an FTP Client 412 when necessary to communicate with FTP Server 404.

This embodiment, which operates somewhat differently from that of FIGS. 1 and 2, operates as follows. When a user of computing system 100 encounters a software failure, he or she (whether manually or automatically) creates a "support case" with a support tool 414 running locally on computing system 100; the support tool, using the local SHS 114, prepares and forwards a request 416 for support to support engineer computer 402. The request 416 includes a configuration file that contains information - generated by SHS 114 - about the setup of SHS 114, including the hostnames of the SHS configuration center and of SHS Communication Gateway 206, other relevant configuration details, and information about the OV products 110, 112 (and the patches for these products) that are installed on the user's computing system 100. The configuration file thus provides the support engineer with a snap-shot of the user's system 100.

The request 416 is received in Support Desk Tool 406. If the information in request 416 is insufficient for determining the cause of the problem, the support engineer determines what additional data he or she needs for resolving the problem and obtains that further information from local SHS 114 using Support Desk Tool 406. Support Desk Tool 406 then sends a request 418 to the SHS Communication Gateway 206 through SHS plug-in 410 for the required data to be collected. SHS plug-in 410 is adapted to send such requests 416 (here for data collection) to SHS Communication Gateway 206 and to receive the ultimate responses (here as notifications) in due course.

SHS Communication Gateway 206 forwards the request 418 to the one or more targeted, computing systems from which data can be collected (typically selected from computing systems 202,204, but optionally the possible targeted, computing systems can include computing system 100), and the selected one or more of the computing systems 202,204 (and optionally 100) collect and return the data 420 to SHS Communication Gateway 206, in the manner described above by reference to FIG. 2. However, SHS Communication Gateway 206, upon receipt of collected data 420, invokes an FTP client 412 to deliver the collected data 420 to the Central Data Repository/FTP Server 404, also by a secure connection. If any user wishes to inspect information collected on his or her respective computing system or withhold it from being forwarded to the Central Data Repository/FTP Server 404, he or she can do so by establishing rules to govern such data transfer; this allows a user to inspect and manually release the files to the Central Data Repository/FTP Server 404 as he or she deems acceptable. If the collected data 420 is indeed forwarded to the Central Data Repository/FTP Server 404, however, SHS Communication Gateway 206 sends a notification 422 to the Support Desk Tool 406 through SHS plug-in 410 to indicate that the request 418 has been met and identifying the location of the collected data. The Support Desk Tool 406 downloads the collected data 420 from the Central Data Repository/FTP Server 404 to support engineer computer 402, and analyses the failure or fault with support engineer computer 402; this is done with a comparison engine, such as one comparable to comparison engine 116 of computing system 100.

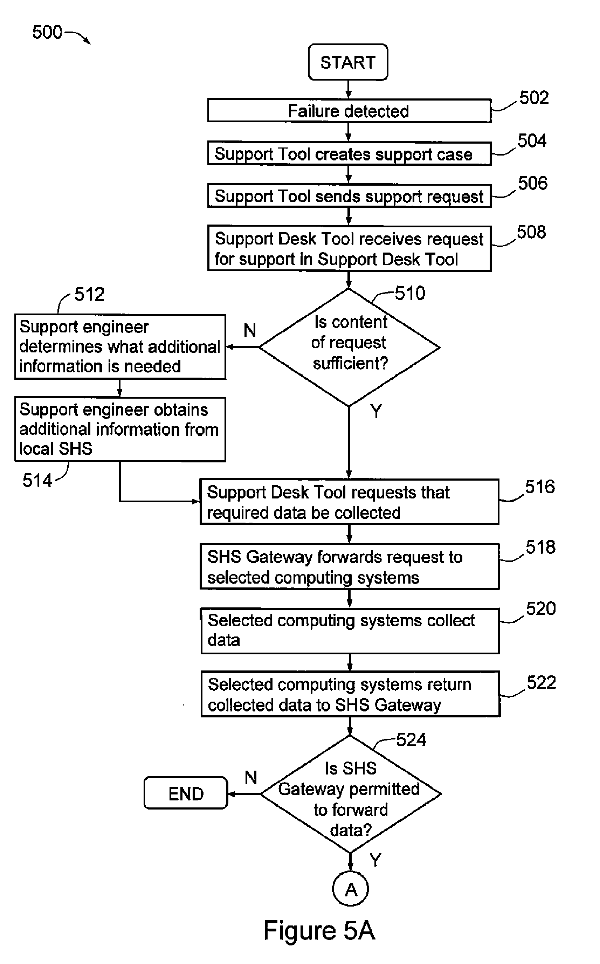

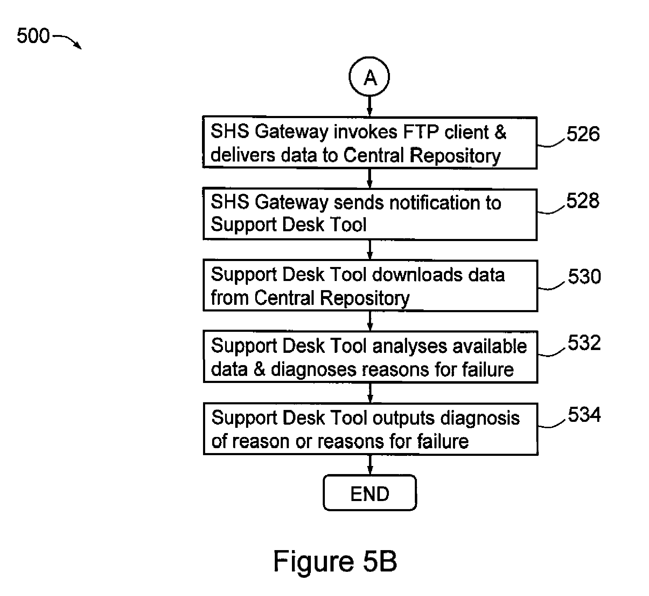

FIGS. 5A and 5B are a flow diagram of this method 500, as employed by computing environment 400. At step 502, following a software failure on computing system 100, the occurrence of the failure is detected by SHS 114. At step 504, Support Tool 414 - using SHS 114 - creates the support case and, at step 506, forwards request 416 for support to support engineer computer 402.

At step 508, the Support Desk Tool 406 of support engineer computer 402 receives the request 416. At step 510, the support engineer determines whether the content (i.e. log files, command outputs, etc.) of the request are sufficient for resolving the problem. If so, processing continues at step 516; if not, processing continues at step 512 where the support engineer determines what further information he or she needs for resolving the problem. At step 514, the support engineer obtains that further information from local SHS 114 and using Support Desk Tool 406. Processing then continues at step 516.

At step 516 Support Desk Tool 406 sends request 418 to the SHS Communication Gateway 206 for the required data to be collected. At step 518, SHS Communication Gateway 206 forwards the request 418 to the selected one or more of computing systems 100,202,204. At step 520, the selected computing systems 100,202,204 collect the data 420 and - at step 520 - return the collected data 420 to SHS Communication Gateway 206. At step 524, SHS Communication Gateway 206 checks whether it is permitted (according to any user rules) to send the collected data 420 to the Central Data Repository/FTP Server 404. If not, processing ends (unless another source of suitable data can be identified).

If so (and SHS Communication Gateway 206 has permission), processing continues at step 526, where SHS Communication Gateway 206 invokes an FTP client 412 and delivers the collected data 420 to the Central Data Repository/FTP Server 404 by secure connection and, at step 528, sends a notification of the data transfer to Support Desk Tool 406.

At step 530, Support Desk Tool 406 downloads the collected data 420 from the Central Data Repository/FTP Server 404 to support engineer computer 402. At step 532, Support Desk Tool 406 analyses the available data thus collected (from the user's computing system 100 and from the other computing systems 202,204) to diagnose the reason or reasons for the failure and, at step 534, outputs a diagnosis.

Thus, as the above embodiments demonstrate and as will be apparent to the skilled person, the present invention is suitable for use with or without the intervention of a support desk, can be used with client-server applications such as HP Open View Operations (OVO), where the data collected on the agent side may not be sufficient for analysis and server data is as relevant as the agent data in the diagnosis of the failure, and in peer-to-peer communication environments where log files from both (or all) computing systems are used in solving the failure or fault.

In some embodiments the necessary software for controlling each component of either computing environment 200 of FIG. 2 or computing environment 400 of FIG. 4 to perform the methods of, respectively, FIG. 3 and FIGS. 5A & 5B is provided on a data storage medium. It will be understood that, in this embodiment, the particular type of data storage medium may be selected according to need or other requirements. For example, instead of a CD-ROM the data storage medium could be in the form of a magnetic medium, but any data storage medium will suffice.

The foregoing description of the exemplary embodiments is provided to enable any person skilled in the art to make or use the present invention. While the invention has been described with respect to particular illustrated embodiments, various modifications to these embodiments will readily be apparent to those skilled in the art, and the generic principles defined herein may be applied to other embodiments without departing from the spirit or scope of the invention. It is therefore desired that the present embodiments be considered in all respects as illustrative and not restrictive. Accordingly, the present invention is not intended to be limited to the embodiments described above but is to be accorded the widest scope consistent with the principles and novel features disclosed herein.

## Claims

1. A software failure analysis method for use following detection of a software failure on a computing system, comprising:
collecting local data from said computing system pertaining to said failure;
sending a request for comparison data to at least one other computing system, said request characterizing said comparison data according to one or more characteristics of said failure;
said other computing system automatically responding to said request for comparison data by collecting or generating said comparison data by reference to said request;
automatically responding to a provision of said local data and said comparison data by forming a comparison between said local data and said comparison data; and
outputting said comparison.

2. A method as claimed in claim 1, further comprising gathering said local data and said comparison data on either said computing system or in a data repository.

3. A method as claimed in claim 1 or claim 2, including collecting or generating said local data and said comparison data with a plurality of instances of a software tool adapted to collect data pertaining to software performance.

4. A method as claimed in any preceding claim, including forwarding said request for comparison data to said other computing system via a gateway and forwarding said comparison data from said other computing system via said gateway.

5. A method as claimed in any preceding claim, further comprising responding to said detection of said software failure by automatically sending a request for support to a remote support system in electronic communication with said computing system and with said other computing system, said request for support including said local data and said remote support system being adapted to send said request for comparison data to said other computing system.

6. A method as claimed in any preceding claim, including forming said comparison between said local data and said comparison data on said computing system.

7. A method as claimed in any one of claims 1 to 5, including forming said comparison between said local data and said comparison data on said remote support system.

8. A computing system adapted to analyse a software failure on said computing system, comprising:
a software tool adapted, once initiated:
to collect local data from said computing system pertaining to said failure;
to send a request for comparison data to at least one other computing system, said request characterizing said comparison data according to one or more characteristics of said failure;
to receive said comparison data from said other computing system, said comparison collected or generated by reference to said request by said other computing system in response to said request; and
to form a comparison between said local data and said comparison data; and
an output for outputting said comparison.

9. A computing environment adapted to analyse a software failure in a computing system within said computing environment, comprising:
at least one other computing system;
a first software tool provided on said computing system and adapted to respond to detection of said failure by collecting local data from said computing system pertaining to said failure;
a second software tool adapted to send a request for comparison data to said other computing system, said request characterizing said comparison data according to one or more characteristics of said failure;
a third software tool provided on said other computing system and adapted to respond to said request for comparison data by automatically collecting or generating said comparison data by reference to said request;
a fourth software tool adapted to receive said local data and said comparison data, and to form a comparison between said local data and said comparison data; and
an output for outputting said comparison.

10. A computing environment as claimed in claim 9, wherein said second and fourth software tools are provided on said computing system.

11. A computing environment as claimed in claim 9, wherein said second and fourth software tools are provided on a remote support system in electronic communication with said computing system and with said other computing system.

12. A computing environment as claimed in claim 9 or claim 10, wherein said first, second and fourth software tools are provided in a single software package on said computing system.

13. A computer readable medium provided with program data that, when executed on a computing system or systems, implements the method of any one of claims 1 to 7.
